(19) Europäisches Patentamt
European Patent Office
Office européen des brevets

(11) **EP 4 687 089 A1**

(12) **EUROPEAN PATENT APPLICATION**

(43) Date of publication:
**04.02.2026 Bulletin 2026/06**

(21) Application number: **24191909.1**

(22) Date of filing: **30.07.2024**

(51) International Patent Classification (IPC):
**G06Q 20/06** *(2012.01)*    **G06Q 20/38** *(2012.01)*
**G06Q 20/40** *(2012.01)*

(52) Cooperative Patent Classification (CPC):
**G06Q 20/065; G06N 20/00;** G06Q 20/389;
G06Q 20/401

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mastercard International Incorporated
Purchase, NY 10577 (US)**

(72) Inventors:
• **TANEJA, Mohit**
**Waterford, X91 C521 (IE)**
• **ONWUEGBUCHE, Faithful Chiagoziem**
**Dublin, D22 C4H0 (IE)**

• **NICHOLLS, Jack**
**Dublin, A94 C3C6 (IE)**
• **CONWAY, James**
**Dublin, D12 CH63 (IE)**
• **KOTHALE, Nitish**
**Dublin, D01 PX81 (IE)**
• **HAUCK, Peter**
**Menlo Park, 94025 (US)**
• **HOLLAND, Shannon**
**San Francisco, 94117 (US)**
• **FLINTER, Stephen Patrick**
**Dublin, D6W DR68 (IE)**
• **MORAN, Weston**
**Merrimack, 03054 (US)**

(74) Representative: **Keltie LLP
No. 1 London Bridge
London SE1 9BA (GB)**

(54) **DETECTING BATCHED TRANSACTIONS**

(57)    A computer implemented method to obtain a batch transaction detection model that uses a machine learning process to detect that a transaction of a digital currency is a batch transaction is described. The method comprises obtaining transaction data from a block in a blockchain, wherein the transaction data comprises a plurality of items, each item having a set of features and associated feature values. The method further comprises generating an aggregated transaction data set of the transaction data and labelling the aggregated transaction data set according to whether the transaction is a batch transaction. The method then uses a feature selection method to remove from the aggregated transaction data redundant features and collinear features, in order to generate a reduced transaction data set having substantially independent features relevant to batch transaction detection. The redundant features are features determined not to be predictive for detecting batch transactions and wherein collinear features are features determined to be highly correlated with each other. The method then trains, tests and validates the batch transaction detection model using the reduced transaction data set; where the trained batch transaction detection model is adapted to determine whether a transaction is a batch transaction on the basis of the values of the features determined to be relevant to batch transaction detection.

Figure 2

## Description

### Field Of Disclosure

The present disclosure relates generally to transactions of digital currencies stored in blockchain. More specifically but not exclusively, the disclosure relates to determining whether a transaction of a digital currency stored in a blockchain is a batched transaction.

### Background

Blockchain cryptocurrencies are generally considered to be secure currencies, since their structure is designed to provide an immutable ledger of transactions, which are recorded and stored in a distributed manner across a network.

The Bitcoin blockchain houses approximately 2,700 transactions per block, and there are over 770,000 blocks on the Bitcoin blockchain. Furthermore, each transaction (e.g. transfer of funds) can involve many different inputs (wallets or addressees transferring funds) and outputs (wallets or addresses receiving the transferred funds). Many of these transactions can be batch or multi-send transactions, in which multiple payments to different users are consolidated into a single transaction with many outputs rather than creating and sending each transaction for each user separately. Such batch transactions may be used differently, and may have different risk profiles.

Currently, there are several public resources that monitor cryptocurrency transactions and provide analytic information on cryptocurrency activity. Examples of these are: ESET, Kaspersky Lab, Malwarebytes, and Symantec. However, the individual analysis of each transaction to obtain accurate analytical data is not practical in addition to being computationally expensive.

### Summary

As described in the background above, analysing individual transactions in blockchain-based cryptocurrencies such as bitcoin and their characteristics is an on-going area of research interest, specifically to provide improved analytic data quality. In particular, the analysis of the transaction information for identification of batched and unbatched transactions may be used to improve fiat-crypto transaction tracing, since batched transactions are often an indication of where in the blockchain fiat currencies are exchanged for cryptocurrencies. Therefore, identifying batched transactions within a blockchain can be used to identified points in the chain where crypto exchanges occur, both "on-ramp" transactions (the process of exchanging fiat currencies for cryptocurrencies) and "off-ramp" transactions (exchanging cryptocurrencies for fiat currencies), and thus improving the transparency and security of the transactions within the blockchain.

Blockchain-based cryptocurrency transactions can currently be labelled as batched or unbatched in a heuristic manner by analysing the input and output addressees (or wallets) involved in the transaction. However, as noted above, there can be up to 2000 inputs and outputs for any individual transaction, and each of those inputs and outputs may have over 100 features (e.g. individual columns of data) associated with it. This makes heuristic methods of labelling transactions as batch cumbersome and untenable to apply in real-time.

As the need for blockchain analytics and improved data quality rises, there is a concomitant need for an efficient way to of classifying batched and unbatched transactions. However, based on publicly available information, blockchain analytics companies and researchers are yet to address this need. Thus, the embodiments described herein comprise systems and methods that can be used in real-time to assess whether transaction data for a transaction is a batched transaction, to enable better identification of potential cryptocurrency exchanges points within the blockchain.

Thus, according to a first aspect there is a computer implemented method to obtain a batch transaction detection model by using a machine learning process to detect that a transaction of a digital currency is a batch transaction, the method comprising: obtaining transaction data from a block in a blockchain, wherein the transaction data comprises a plurality of items, each item having a set of features and associated feature values; generating an aggregated transaction data set of the transaction data; labelling the aggregated transaction data set according to whether the transaction is a batch transaction; using a feature selection method to remove from the aggregated transaction data redundant features and collinear features in order to generate a reduced transaction data set having substantially independent features relevant to batch transaction detection, wherein redundant features are features determined not to be predictive for detecting batch transactions and wherein collinear features are features determined to be highly correlated with each other; training, testing and validating the batch transaction detection model using the reduced transaction data set; wherein the trained batch transaction detection model is adapted to determine whether a transaction is a batch transaction on the basis of the values of the features determined to be relevant to batch transaction detection.

This approach has clear benefits in relation to improving transparency and security within the blockchain. Firstly, the identification of batch transactions enables fiat-crypto currency transaction tracing within the blockchain, which can also be used to facilitate identification of cryptocurrencies originating from fraudulent transactions. Secondly, the feature selection process used, which removes redundant and collinear features from the transaction data used to train, test and validate the machine learning model, results in a model that is more focused and effective. In addition, the reduction of the dataset of variables achieved from the feature selection method, reduces the noise and enhances the overall efficiency of the machine learning model obtained.

In embodiments, training, testing and validating the batch transaction detection use respectively a first portion, a second portion and a third portion of the reduced transaction data set, each portion being a separate portion of the of the transaction data set. This means that the different steps of training, testing and validating the machine leaning model are performed using different datasets, which prevents the model from overfitting, and results in more stable results.

In some implementations, the first portion corresponds to 70% of the reduced transaction data set, the second portion corresponds to 25 % of the reduced transaction data set and the third portion corresponds to 5% of the reduced transaction data set. This results in a split of the dataset that reduces computational costs while maintaining the dataset representativeness for training, testing and validating of the machine learning model.

In some instances, the feature selection method comprises a two-stage feature selection method comprising: a first stage for removal of redundant features; and a second stage for removal of collinear features. This beneficially allows for a more efficient feature reduction, since the complexity of the dataset is reduced from the first stage to the second stage of the process.

In embodiments, the reduced transaction data set comprises publicly available data or data derivable from publicly available data. Optionally, in some implementations the removal of redundant features comprises removal of features that are not derivable from publicly available data.

In a second aspect, the disclosure provides a computer implemented method for detecting that a transaction of a digital currency is a batch transaction, the method comprising: obtaining aggregated transaction data from transaction data of a block in a blockchain; providing the aggregated transaction data to a machine learning model trained to identify whether a transaction in the blockchain is a batch transaction; and receiving from the model, as output, information of whether the transaction is a batch transaction.

As noted above, this approach has clear benefits in relation to improving transparency and security within the blockchain. In addition, this approach enables the evaluation, in real-time, of blocks within a blockchain, where each block comprises a large number of transactions, to identify which transactions are batched transactions.

In some implementations, the machine learning model is a batch transaction detection model developed by the method of the first aspect.

In yet a third aspect, the disclosure provides a computer system comprising a computer readable medium and a processor, the computer readable medium having a computer readable code embodied therein, the computer readable code being configured such that, when executed by the processor, the computer system is adapted to implement the batch transaction detection model of the first aspect.

In a fourth aspect, the disclosure provides a computer system comprising a computer readable medium and a processor, the computer readable medium having a computer readable code embodied therein, the computer readable code being configured such that, when executed by the processor, the computer system is adapted to implement the method for detection that a transaction of a digital currency is a batch transaction of the second aspect.

In summary, the disclosure herein relates to methods and computing nodes for transforming aggregated transaction data to a reduced form, where redundant and collinear features are removed to enable efficient labelling of the reduced transaction data. The reduced transaction data is then used to train a machine learning model to label incoming/pending transactions in an efficient, light weight manner resulting in a model that can be used in real-time to identify batched and unbatched transactions.

It has been previously difficult to use machine learning in this manner, due to the excessive size of the transaction data contained in the blocks of the blockchain, and the nested structure of the data therein. What is proposed herein is the use of a method of reducing the number of features analysed within the transaction data to produce a data set with fewer input parameters (e.g. fewer data fields) that can be used to train a machine learning model. The systems and methods herein can be used to eliminate features prone to biasing predictions, that may distort the predictive accuracy of the model or lead to overfitting of the model, and features that can hinder model stability, particularly in financial datasets like Bitcoin transactions, where intricate relationships may exist among variables. There are thus provided systems and methods for transforming cryptocurrency blockchain data (such as Bitcoin data) into a format that can produce an accurate and robust prediction model to detect batched and unbatched transactions.

**Brief Description of the Drawings**

Figure 1 illustrates an example computing node suitable for implementing embodiments of the present disclosure;

Figure 2 shows an example method of training a model according to embodiments of the present disclosure;

Figure 3 is a schematic diagram showing example steps of a method for obtaining an aggregated transaction table according to embodiments of the present disclosure;

Figure 4 shows example input and output rows of transaction data and of the resulting aggregated transaction data for an example transaction according to some embodiments herein;

Fig. 6 is a schematic diagram showing example steps of a method for obtaining an aggregated transaction table according to embodiments of the present disclosure; and

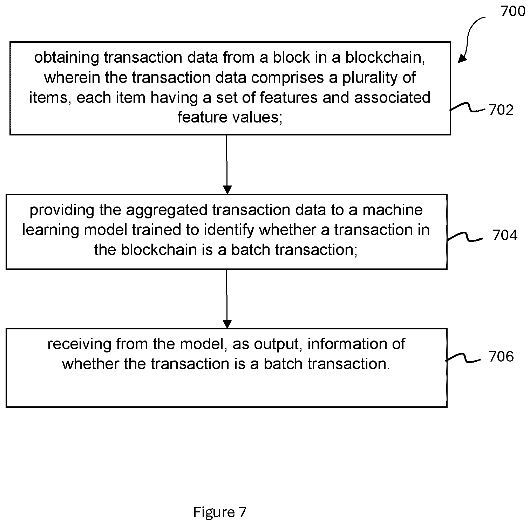

Fig. 7 shows an exemplary method used to develop the prediction model according to some embodiments herein.

**Detailed description**

As described above in the summary section, the disclosure herein relates to the creation of a reduced dataset for use in training a machine learning model to identify batched and unbatched transactions from transaction data stored in a blockchain ledger.

Batching or multi-send is a cost-effective technique employed by crypto exchanges to consolidate multiple payments to different users into a single transaction with many outputs, rather than creating and sending each transaction for each user separately. These types of transactions are linked to the exchange of fiat currencies (e.g. a government backed currency) for cryptocurrencies (i.e., "on-ramp" transactions) and with the process of exchanging cryptocurrencies for fiat currencies (i.e., "off-ramp" transactions).

Although the majority of the blockchain cryptocurrencies transactions are linked to non-fraudulent, licit activity, cryptocurrency related crime has been a major concern of governments and regulatory bodies worldwide. In particular, on-ramp and off-ramp transactions are key points of interest in cryptocurrency networks, as these are used by criminals to lauder funds gained from illicit cryptocurrency transactions (e.g., obtained from ransomware) and obtain fiat currency. Therefore, identifying these batched transactions at scale using machine learning would enable fiat-crypto currency transaction tracing, and improve analysis and inspection of the transactions within the blockchain, to facilitate identification of fraudulent transactions.

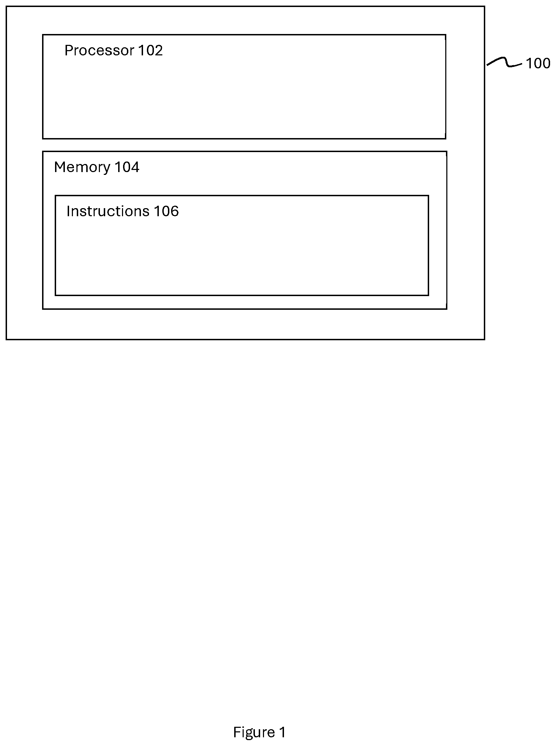

Fig. 1 shows a node (e.g. a computing node) according to some embodiments herein. The node 100 may generally be configured (e.g. operative) to perform any of the methods and functions described herein, such as the method 200 and the method 700 described in detail below.

In some embodiments, the node 100 comprises a processor 102, a memory 104 and set of instructions 106. The memory holds instruction data (e.g. such as compiled code) representing set of instructions 106. The processor may be configured to communicate with the memory and to execute the set of instructions. The set of instructions, when executed by the processor, may cause the processor to perform any of the methods herein, such as the method 200 or the method 700 described below.

Processor (e.g. processing circuitry or logic) 102 may be any type of processor, such as, for example, a central processing unit (CPU), a Graphics Processing Unit (GPU), a Neural Processing Unit (NPU), or any other type of processing unit. Processor 102 may comprise one or more sub-processors, processing units, multi-core processors or modules that are configured to work together in a distributed manner to control the node in the manner described herein.

The node 100 may comprise a memory 104. In some embodiments, the memory 104 of the node 100 can be configured to store program code or instructions that can be executed by the processor 102 of the node 100 to perform the functionality described herein. The memory 104 of the node 100, may be configured to store any data or information referred to herein, such as for example, requests, resources, information, data, signals, or similar that are described herein. The processor 102 of the node 100 may be configured to control the memory 104 of the node 100 to store such information.

In some embodiments, the node 100 may be a virtual node, e.g. such as a virtual machine or any other containerised computer node. In such embodiments, the processor 102 and the memory 104 may be portions of larger processing and memory resources respectively.

It will be appreciated that a computing node 100 may comprise other components to those illustrated in Fig 1. For example, node 100 may comprise a power supply (e.g. mains or battery power supply). The node 100 may further comprise a wireless transmitter and/or wireless receiver to communicate wirelessly with other computing nodes. In some embodiments, the node 100 may further comprise a user input device such as a mouse, keyboard, or touch pad, for receiving input user data. In some embodiments, the node 100 may further comprise a display for displaying any of the data described herein, such as for example, any of the outputs (or intermediate data products) of any of the methods described herein.

As described above, the node 100 is for use in predicting whether a transaction of a digital currency stored in a blockchain is a batched transaction. Thus, in some embodiments, the node 100 may be in a peer-to-peer network involved in storing a blockchain. In other embodiments, as will be described in more detail below, the node 100 may be comprised in (or otherwise associated with) a currency exchange, for use in predicting whether transactions are batched or unbatched as part of a security process.

As noted above, in some embodiments, the node 100 is configured to obtain a batch transaction detection model by using a machine learning process, to determine whether a transaction of a digital currency is batched or unbatched. In brief, in such embodiments, the node 100 may be configured to unpack a block in the blockchain into a table comprising one or more rows of input and output data for a previous transaction stored in the block. The node 100 may be further configured to aggregate the one or more rows of input and output data to form an aggregated row of transaction data for the previous transaction and label the aggregated row of transaction data for the previous transaction according to whether the previous transaction is a batched transaction. The transaction data may comprise a plurality of items having a set of features and associated feature values. The node 100 may be further configured to use a two-stage feature selection method for generating a reduced transaction data set with a reduced the number of input variables used to develop the identification model. The reduced transaction data set is then split into three portions that are used for training, testing and validating of the model.

The skilled person will be familiar with blockchain, but in brief, a blockchain is a distributed database that maintains a continuously growing list of ordered records, e.g., blocks. Each block contains a cryptographic hash of the previous block, a timestamp and transaction data for the transactions captured in the block. In this way, a chain is created. The blockchain is stored in a decentralized, distributed and public digital ledger that is used to record transactions across a peer-to-peer network. Each server in the distributed system stores a copy of the ledger and communicates with other servers in the distributed system to build a consensus of the transactions that have occurred. The record of the transactions cannot be altered retroactively without the alteration of all subsequent blocks and the consensus of the other servers in the peer-to-peer network. As such, over time, the blocks in a blockchain became fixed and unchanging (immutable). For more information, see the paper by Nofer, M., Gomber, P., Hinz, O. et al. entitled "Blockchain" Bus Inf Syst Eng 59, 183-187 (2017).

Embodiments herein relate to digital currencies stored in blockchain, which may otherwise be referred to herein as cryptocurrencies. The skilled person will be familiar with cryptocurrencies, which may be different to e.g. fiat currencies which are generally backed by government bodies and which may be transferred either digitally or using physical currency. Generally, the digital currency described herein may be a cryptocurrency based on the Unspent Transaction Output, UTxO design. Examples of these cryptocurrencies include, but are not limited to: Bitcoin, Bitcoin cash and Litecoin. The skilled person will be familiar with bitcoin, which is discussed, for example, in the paper by Bohme, Rainer, Nicolas Christin, Benjamin Edelman, and Tyler Moore. 2015, entitled: "Bitcoin: Economics, Technology, and Governance." Journal of Economic Perspectives, 29 (2): 213-38.

The disclosure herein relates to transactions. A transaction in this sense is a transfer of funds (e.g. items of currency) on the blockchain from a first entity to a second entity. In this sense an entity may be an owner of the funds on the blockchain. An entity may otherwise be referred to herein as an addressee. Digital currency may be held in a wallet belonging to an entity or addressee. As such, a transaction may be described as a transfer of funds from a first wallet to a second wallet.

In the present disclosure, batched or multi-send transactions (the term "batched" will be used generally below to describe any approach to aggregating transactions in such a way) use a technique of including multiple transactions into a single transaction with many outputs. Because cryptocurrency transaction fees are paid based on how much data the transaction uses, combining multiple transactions into a single transaction can lower data overhead and thus reducing the average cost per transaction.

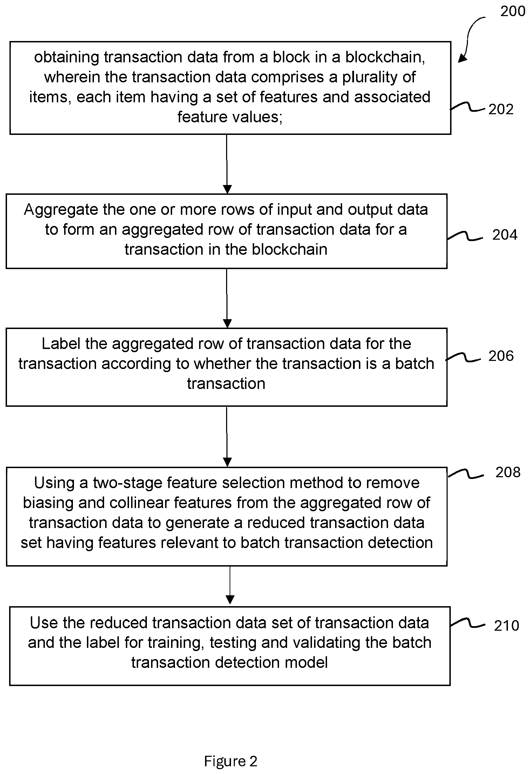

Fig. 2 shows a method of training a model, using a machine learning process, to determine whether a transaction of a digital currency is batched or unbatched. The method 200 is computer implemented and may be performed by a computing node such as the node 100 described above.

A high-level description of this method is as follows. In a first step 202, the method 200 comprises obtaining transaction data from a block in a blockchain, wherein the transaction data comprises a plurality of items, each item having a set of features and associated feature values. In a second step 204 the method 200 comprises aggregating the one or more rows of input and output data to form an aggregated row of transaction data for a transaction in the blockchain. In a third step 206 the method 200 comprises labelling the aggregated row of transaction data for the transaction according to whether the transaction is a batched transaction. In a fourth step 208 the method 200 comprises using a two-stage feature selection method to remove biasing (or redundant) and collinear features from the labelled aggregated transaction data to generate a reduced transaction data set having features relevant for batched transaction detection. In a fifth step 210 the method 200 comprises using the reduced transaction data set for training, testing and validating the batch transaction detection model.

The blockchain may be stored in the cloud. For example, in embodiments where the digital currency is bitcoin, a cloud storage service may be used to store the blockchain data. The cloud data, such as e.g., Google Cloud, may be accessed using a query tool such as, for example, the "BigQuery" tool.

Thus, in step 202, the method 200 may comprise obtaining a block in the blockchain, e.g., from a cloud storage such as Google Cloud.

The block may be a historical block containing transaction data of previous (e.g. historical) transactions, or a block that is about to be added to the blockchain.

The data in the received block may be arranged in a tree-like structure (such as e.g., a Merkle Tree). Step 202 may therefore comprise unpacking said tree-like structure to present each transaction as a plurality of input and output rows of transaction data.

In a digital currency blockchain (e.g., Bitcoin), each block in the digital currency blockchain houses approx. 2,700 transactions and each transaction can have up to 2000 inputs and outputs. The inputs and outputs of a transaction contain information indicating which entities (e.g. which addresses or wallets) are transferring funds to which other addresses (e.g. which other addresses or wallets) in a transaction. Input transaction data is data related to an entity that is making a transfer of funds in a transaction. Output transaction data is data related to an entity that is receiving said funds in the transaction (e.g. the beneficiary/recipient of the transaction). There may be more than one input to a transaction because more than one wallet may contribute funds to a single transaction. There may also be more than one output to a transaction, because funds that are transferred may be split between two or more recipients of the transaction. This information is retained in the form of features of the data set. These features are selected as described below and used for training of the predictive machine learning model.

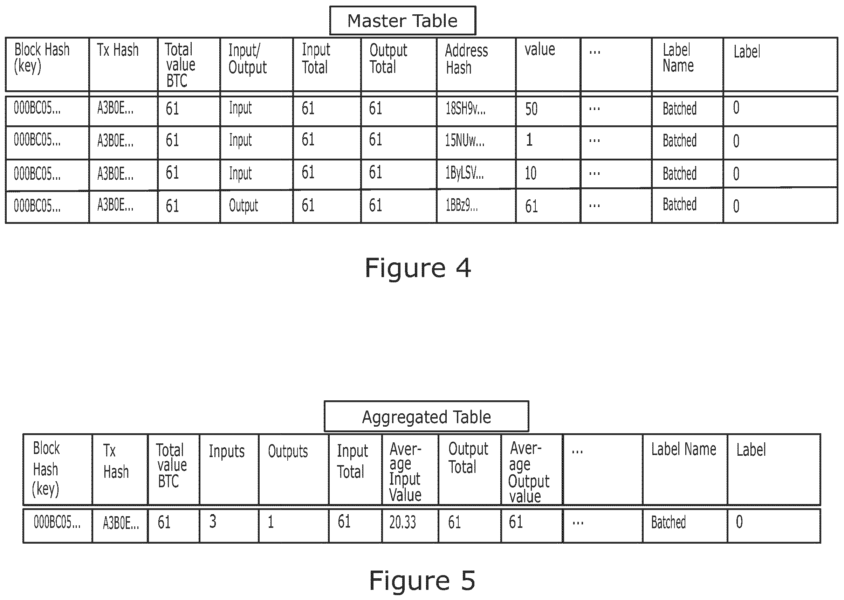

Turning back to the method 200, generally, the output of step 202, e.g. the unpacked cryptocurrency blocks, may result into thousands of rows, due to each transaction in the blockchain comprising multiple inputs and outputs. The volume of data associated with a transaction can make it computationally too expensive for many heuristic methods to process a transaction in real-time as part of a verification process. Therefore, in some embodiments, in step 204 the one or more rows of input and output data is aggregated into a single row of data. In other embodiments, the one or more rows of input and output data may be aggregated into two rows of data, a first row comprising an aggregation of the inputs to the transaction and a second row comprising an aggregation of the outputs of the transaction. It will be appreciated that these are merely examples, and that the one or more rows of input and output data may equally be aggregated to produce more than two rows of aggregated data. Figure 4 shows an example of inputs of step 204 and an example of output aggregated transaction data is shown in Figure 5.

The aggregation (or compression) may be performed in different ways. For example, in some embodiments, a statistical aggregation of each field (or feature) in the one or more rows is taken. In this sense, a statistical aggregation may be any one or any combination of, a count, average, median, mean, mode, standard deviation, or range of the values in the one or more inputs and outputs of the transaction. It will be appreciated that these are merely examples however and that other functions may equally be applied to combine the values in a field.

It will also be appreciated that different types of statistical aggregation may be performed on different fields. For example, the values of a first field may be aggregated using a first function (e.g. selected from a count, average, median, mean, mode, standard deviation, or range) and a second field may be aggregated using a second function (e.g. selected from a count, average, median, mean, mode, standard deviation, or range). The aggregation condenses the information within a transaction, reducing computational costs of processing the data, without incurring significant loss of information.

Turning back to the method 200, in step 206, the method comprises labelling the aggregated row of transaction data according to whether the transaction is a batched transaction. The labelling may be performed in any known manner. For example, a heuristic method may be used to label the data as batched or unbatched.

The labelled data contained mainly two types of features. One type of feature is associated with the information relating to the number of cryptocurrency transactions within the block, the value of these transactions, the average number of inputs and the average number of outputs, among other data related to the blockchain. The second type of feature is associated with attribution of labels when identifying the transactions within the block in the blockchain as batched or unbatched.

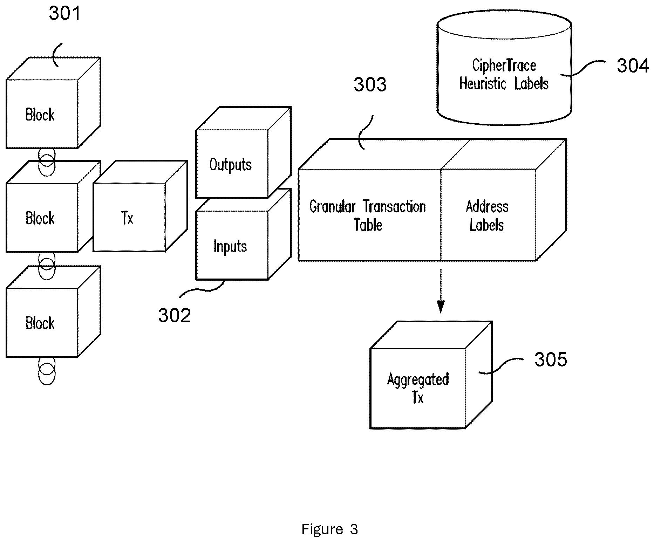

Figure 3 provides a summary of the process performed in steps 202 to 206 of the method 200. As described in relation to steps 202 to 206 above, Figure 3 represents the unpacking of the data contained within the blocks 301 of the blockchain, and stored in, for example a database such as a cloud database (e.g., BigQuery). The unpacking results in the extraction or unnesting of the information related to the outputs and inputs 302 of the transaction within the blockchain. The table obtained from the unpacking step corresponds to a granular transaction table 303 which is combined with historical labelled data 304 related to identifying transactions as batched. The historical label data 304 is obtained by combining a definition of a batch transaction with information for previously performed transactions, including information relating to addresses that performed these transactions. Here a batch transaction is defined as a transaction containing more than one output. Using this definition, data for previously performed transactions is analysed to identify addresses involved in transactions having more than one output, which are then identified and labelled. The granular transaction table 303 merged, or combined with the historical labels is then compressed to form an aggregated table 305 in which each line of the table corresponds to a transaction of the blockchain, and provides all the information regarding inputs, outputs and properties of the transaction.

In step 208 of the method 200, a two-stage selection method is applied to the aggregated transaction data to remove redundant and collinear features from the aggregated row of labelled transaction data to generate a reduced transaction data set having features relevant to batched transaction detection.

The inventors identified that purposely selecting the features that are used for training, testing and validating a machine learning algorithm produces more efficient results and a more robust model, since it reduces the variation resulting from features that are of less importance to the data set, or that may generate biasing in the predictions.

In embodiments of the present disclosure, a two-stage feature selection technique applied is used for reducing the number of input variables when developing the predictive machine learning model. This approach involves a two-stage process:

- The first stage involves the removal of redundant features, showcasing a proactive integration of domain knowledge. The meaning of "redundant" in this context is discussed below.

- The second stage focuses on removing collinear features. Collinear features are relevant to the predictive power of the model, but are so closely correlated to each other that they are better treated as a single variable. In this context, removal of collinear features does not involve removing all features that are collinear to another feature, but instead this means reducing a set of collinear features to a single feature effectively representative of the whole set. This step simplifies the model without losing important information provided by the features. The methodology used in determining the collinear features is based on the Pearson correlation coefficient. In this methodology, a matrix is created representing the correlation of each feature against another. A threshold of 0.8 is used to determine the collinear features. Accordingly, if two features have a correlation coefficient of 0.8 and above, they are considered collinear features, and one of the features is dropped from the model.

Performing this two-stage process allows the dimensionality of the problem to be greatly reduced while still using a subset of the original variables of the dataset.

The first stage here is the removal of redundant - in general, proprietary - features that do not have predictive quality, but which do have the possibility of biassing the model. Domain knowledge is used to strip such features out of the data set. Bitcoin transactions, for example, provide particular challenges here, as the history of Bitcoin has led to extensive attribution of features to a Bitcoin transaction, typically to determine whether or not a specific transaction is, or is likely to be, illicit. Here, retention of proprietary and other features redundant to the modelling problem at issue here may distort the predictive accuracy of the model or may lead to overfitting of the model. As proprietary features are removed at this point, the output of this first stage comprises publicly available data - an assemblage of publicly available features and features aggregated from publicly available features.

After this first stage, the dimensionality of the problem to be modelled has been significantly reduced - this is further reduced in the second stage of removing collinear features. The dimensionality reduction achieved in the first stage makes it easier to determine linear dependencies (or collinearity) of the remaining features, performed in the second stage. In the second stage, collinear features - features highly correlated with each other - are removed before modelling to improve both the performance and interpretability of the model. Keeping such features can lead to multicollinearity, in which case the model may have difficulty in distinguishing the impact of one feature from another, leading to instability in coefficient estimation and reduced reliability in making predictions. Removal of collinear features to reduce the dataset to variables that are at best weakly correlated allows the model to become more focussed on independent relationships, enhancing effectiveness, and reducing noise and instability. This type of instability is a particular risk for financial datasets such as found in Bitcoin transactions, where intricate relationships may exist among variables. This explicit handling of collinearity ensures that the resultant dataset retains key information while minimizing the number of variables used.

Consequently, the feature selection method applied should remove proprietary features used to label the transactions as batched and unbatched, as well as other labels used to identify illicit transactions, such as but not limited to, timestamps, transaction output hash addresses, block hash, among others. Consequently, the feature selection method described removes redundant features that may interfere in the training of the model. In addition, the second state of the feature selection method removes features identified as collinear, in other words, features that are highly correlated with each other that when removed from the training data result in a model that is more focused on features which are independent from each other, or at most weakly dependent. This enhances the model's effectiveness and reduces potential noise and instability in predictions. This also enhances the explanatory power of the model, as the resulting feature set relates to measured variables.

This approach is in contrast to other approaches that the skilled person would consider here. Known methods for treating high-dimensionality data do also rely on dimensionality reduction. One commonly used method is Principal Component Analysis (PCA). Principal Component Analysis (PCA) is a dimensionality reduction technique that transforms the original features into a new set of uncorrelated variables, called principal components. These components capture the maximum variance in the data. This feature does not explicitly select features but transforms the original features into a new feature space.

Therefore, PCA serves as a projection method, transforming a dataset with m-columns into a subspace with m or fewer columns, maintaining the essence of the original data. The resulting projection, a new dataset with constructed features, can be utilized to train machine learning models. Notably, these new features lack direct comparability to the original data.

The main advantage of the two-stage feature selection technique used in the present disclosure involves choosing specific features to retain or discard from the dataset, while the dimensionality reduction optioned with methods such as PCA creates a data projection, generating entirely new input features. The two-stage feature selection technique of embodiments of the disclosure benefits from effective integration of domain knowledge together with explicit handling of collinearity to reduce dimensionality. This aligns with the unique characteristics of cryptocurrency datasets, providing a more tailored and effective solution compared to the more generic and automated approach of PCA. It also has more explanatory power because the model is expressed in terms of real, measured, features.

Here, it is found that using an approach based on PCA would not capture the intricacies of the cryptocurrency transaction dataset since it would create only projections of the data. While PCA effectively reduces dimensionality by transforming features into uncorrelated principal components, it lacks the specificity required for this task. The loss of interpretability inherent in PCA is another crucial reason for not employing it developing a model to identify batched and unbatched transactions, as it may hinder the model's ability to discern the nuances of batched transactions, or the user's ability to interpret the results in such a way as to lead to effective further action. Preserving interpretability is crucial in this context, and the two-stage method achieves this by retaining features that are not only relevant but also understandable.

In addition, PCA assumes that the relationships between variables are linear. If the data has non-linear relationships, PCA may not perform optimally. Thus, while PCA captures the most variance, it does not necessarily retain the most informative features for a specific task. It may discard features that are important for detecting batched transactions in the blockchain-based cryptocurrency dataset, such as, for example in the Bitcoin dataset.

In step 210 of the method 200, the reduced transaction dataset obtained from the two-stage feature selection process is split into three portions. A first portion the reduced transaction data set as training data with which to train a machine learning model to predict whether a transaction in a block of the blockchain is a batched transaction. A second portion of the reduced transaction data set to test the trained machine learning model, and a third potion of the reduced transaction data set is used to validate the trained machine learning model.

The reduced transaction data set may be split in different ways and each separate fraction (i.e., portion) may be used to trained, test and validate the machine learning model. As an example the reduced transaction data set may be split into portions of 70%, 25% and 5%, where the portion corresponding to 70% of the reduced transaction data set may be used to train the machine learning model; the portion corresponding to 25% of the reduced transaction data set may be used to test the trained machine learning model; and portion corresponding to 5% of the reduced transaction data set may be used to validate the trained machine learning model. It is to be appreciated that these are provided as examples only, and other splits may be used within embodiments of the present disclosure.

The skilled person will be familiar with machine learning and methods of training a model using a machine learning process. But in brief, a model, which may otherwise be referred to as a machine learning model may comprise a set of rules or (mathematical) functions that can be used to perform a task related to data input to the model. Models may be taught to perform a wide variety of tasks on input data, examples including but not limited to: determining a label for the input data, performing a transformation on the input data, making a prediction or estimation of one or more parameter values based the input data, or producing any other type of information that might be determined from the input data.

In supervised machine learning, the model learns from a set of training data comprising example inputs and corresponding ground-truth (e.g. "correct") outputs for the respective example inputs. Generally, the training process involves learning weight values of the model so as to tune the model to reproduce the ground truth output for the input data. Different machine learning processes are used to train different types of model, for example, machine learning processes such as back-propagation and gradient-descent can be used to train neural-network models.

The machine learning model used was trained with part of the dataset, where the dataset used to train the model contained only the information related to the inputs and outputs of the transactions, and did not include the historical labelled data that identifying the transactions as batched or unbatched. Once the machine learning model had been trained, it was then tested with another dataset, and the results of the tests were then validated with yet another data set, as described above.

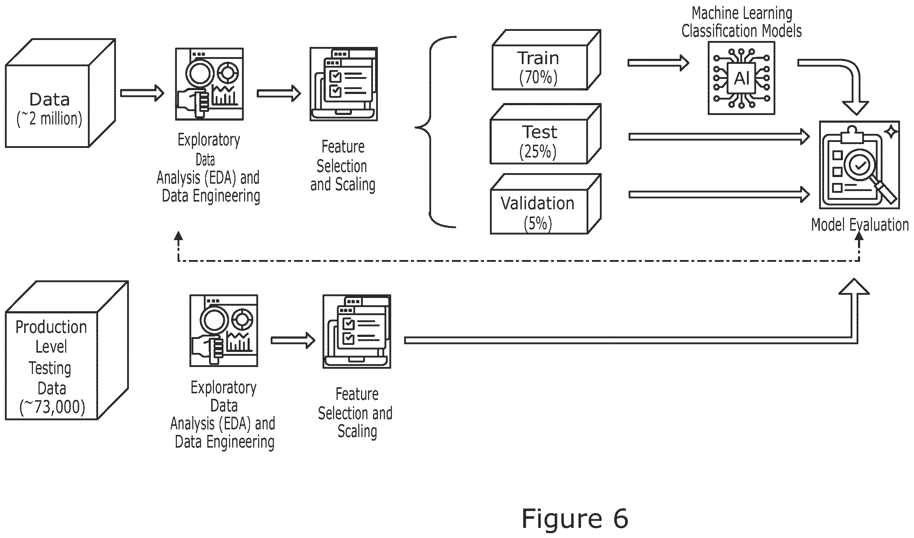

Figure 6 provides a schematic diagram of the process obtaining the trained model, as described above. As illustrated in figure 6, once an aggregated table is obtained from the labelled granular transaction table, an exploratory data analysis is then performed on the aggregated table to obtain information on the data distribution and patterns. The information obtained in the exploratory data analysis step is used to perform a two-stage feature selection process, as described above, for removal of proprietary and collinear features. The resulting training data is then split into three parts that are then used to train, test and validate the predicted machine learning model.

Experimental Data

An example of the feature reduction obtained with this method is illustrated in Table 1 below. Table 1 illustrates an initial data set initially containing 108 features. After eliminating features prone to biasing prediction, the number of remaining features is 26, and after removing collinear features, the total number of features remaining is 13.

Table 1: Two-Stage Feature Selection Technique

| Feature Selection Technique | Number of Remaining Features |
|---|---|
| Original Data (without Target) | 108 |
| Stage 1: Removal of Proprietary Features and Redundant Features | 26 |
| Stage 2: Removal of Collinear Features | 13 |

Training of the machine learning model followed a procedure described above in which the reduced transaction dataset is split to estimate the performance of the machine learning algorithm when making predictions on data not used to train the model. The splitting procedure consists of dividing the data available into three datasets, where one portion of the data is used to train the model, another portion is used to evaluate or test the data and the third portion of the data is used to validate the model. This procedure is particularly appropriate when using large datasets.

The machine learning model used was trained with part of the dataset, where the dataset used to train the model contained only the information related to the inputs and outputs of the transactions, and did not include the historical labelled data identifying the transactions and batched or unbatched. Once the machine learning model had been trained, it was then tested with another dataset, and the results of the tests were then evaluated.

To assess the performance of the trained model, metrics were used which capture the accuracy of the model at identifying batched transactions.

Accuracy may be described using the following formula:

$$Accuracy = \frac{correctly\ classified\ transactions}{total\ transactions}$$

Precision is a metric which evaluates the model's performance of the transactions it labels batched and determines how many of those transactions are correctly assigned batched (True Positive) against falsely assigned batched (False Positive). Precision may be defined using the following formula:

$$Precision = \frac{true\ positive}{true\ positive + false\ positive}$$

Recall is a metric which evaluates the model's performance of the transactions it labels batched (True Positive) and measures how many of the batched transactions were captured by the model by comparing it against batched transaction labelled batched (False Negative).

$$Recall = \frac{true\ positive}{true\ positive + false\ negative}$$

F1-score is the harmonic mean of precision and recall. It is a single metric that allows for evaluation of a model's performance of balancing false positives and false negatives. The closer to 1.0, the better the performance.

$$F1-score = 2 * \left(\frac{precision * recall}{precision + recall}\right)$$

For the current model the machine learning approach used was XGBoost Trees that uses a distributed gradient-boosted decision tree (GBDT) machine learning library, and provided the following metrics: accuracy 0.9813, precision 0.9931, recall 0.9693, F1-score 0.9810.

The validation of the trained machine learning model was performed by using a 10-fold cross-validation process, in which the portion of the reduced transaction dataset was divided into 10 sub-portions, and used separately to validate the robustness of the trained model.

In some embodiments the method 700 may be performed to analyse an previous transaction within the blockchain, or as part of an ongoing transaction (i.e., in real-time).

Briefly, in a first step 702, the method 700 comprises obtaining one or more rows of input and output data for the transaction. In a second step 704, the method 700 comprises aggregating the one or more rows of input and output data to form an aggregated row of transaction data for the transaction, and providing the aggregated row of transaction data to a model trained using a machine learning process. In a third step 706 the method comprises receiving from the model as output, a determination of whether the transaction is a batched transaction.

In more detail, in the method 700 the transaction may refer to a new, or pending transaction. In step 702 the input and output rows of transaction data for the new transaction are obtained and aggregated. Input and output transaction data were described above with respect to the method 200 and the detail therein will be appreciated to apply equally to the method 700. The rows of input and output data are aggregated in the same manner as was described above with respect to step 204 of the method 200. For example, the step of aggregating the one or more rows of input and output data may comprise combining the one or more rows into a single row, by taking a statistical aggregation of values of each field in the respective rows of input and output data, as described above.

In step 706, the aggregated row of transaction data for the new transaction is provided as input to a model trained using a machine learning process model, which provides as output the prediction of whether the new transaction is a batched transaction. The model in step 706 may have been trained using the method 200 described above, and the detail therein will be understood to apply equally to the method 700.

Thus, in use, the model output from the method 200 may be used to determine or label whether a pending transaction is a batched transaction.

Turning now to another embodiment, there is also provided a computer program product comprising a computer readable medium, the computer readable medium having computer readable code embodied therein, the computer readable code being configured such that, on execution by a suitable computer or processor, the computer or processor is caused to perform the method or methods described herein, such as the method 200.

Thus, it will be appreciated that the disclosure also applies to computer programs, particularly computer programs on or in a carrier, adapted to put embodiments into practice. A program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person.

The sub-routines may be stored together in one executable file to form a selfcontained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at runtime. The main program contains at least one call to at least one of the sub-routines. The subroutines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed disclosure, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. Alternatively, more than one processor or other unit may jointly perform aspects of a single function recited in the claims.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner. Any reference signs in the claims should not be construed as limiting the scope.

**Claims**

1. A computer implemented method to obtain a batch transaction detection model by using a machine learning process to detect that a transaction of a digital currency is a batch transaction, the method comprising:

    obtaining transaction data from a block in a blockchain, wherein the transaction data comprises a plurality of items, each item having a set of features and associated feature values;
    generating an aggregated transaction data set of the transaction data;
    labelling the aggregated transaction data set according to whether the transaction is a batch transaction;
    using a feature selection method to remove from the aggregated transaction data redundant features and collinear features in order to generate a reduced transaction data set having substantially independent features relevant to batch transaction detection, wherein redundant features are features determined not to be predictive for detecting batch transactions and wherein collinear features are features determined to be highly correlated with each other;
    training, testing and validating the batch transaction detection model using the reduced transaction data set;
    wherein the trained batch transaction detection model is adapted to determine whether a transaction is a batch transaction on the basis of the values of the features determined to be relevant to batch transaction detection.

2. The computer implemented method of claim 1, wherein training, testing and validating the batch transaction detection use respectively a first portion, a second portion and a third portion of the reduced transaction data set, each portion being a separate portion of the of the transaction data set.

3. The computer implemented method of claim 2, wherein the first portion corresponds to 70% of the reduced transaction data set, the second portion corresponds to 25 % of the reduced transaction data set and the third portion corresponds to 5% of the reduced transaction data set.

4. The computer implemented method of any preceding claim, wherein the feature selection method comprises a two-stage feature selection method comprising:

    a first stage for removal of redundant features; and
    a second stage for removal of collinear features.

5. The computer implemented method of any preceding claim, wherein the reduced transaction data set comprises publicly available data or data derivable from publicly available data.

6. The computer implemented method of any preceding claim, wherein removal of redundant features comprises removal of features that are not derivable from publicly available data.

7. A computer implemented method for detecting that a transaction of a digital currency is a batch transaction, the method comprising:

    obtaining aggregated transaction data from transaction data of a block in a blockchain;
    providing the aggregated transaction data to a machine learning model trained to identify whether a transaction in the blockchain is a batch transaction; and
    receiving from the model, as output, information of whether the transaction is a batch transaction.

8. The computer implemented method of claim 7, wherein the machine learning model is a batch transaction detection model developed by the method of any of claims 1 to 6.

9. A computer system comprising a computer readable medium and a processor, the computer readable medium having a computer readable code embodied therein, the computer readable code being configured such that, when executed by the processor, the computer system is adapted to implement the batch transaction detection model development method of any of claims 1 to 6.

10. A computer system comprising a computer readable medium and a processor, the computer readable medium having a computer readable code embodied therein, the computer readable code being configured such that, when executed by the processor, the computer system is adapted to implement the batch transaction detection method of claim 7 or claim 8.

Processor 102

~ 100

Memory 104

Instructions 106

Figure 1

obtaining transaction data from a block in a blockchain, wherein the transaction data comprises a plurality of items, each item having a set of features and associated feature values; — 202

Aggregate the one or more rows of input and output data to form an aggregated row of transaction data for a transaction in the blockchain — 204

Label the aggregated row of transaction data for the transaction according to whether the transaction is a batch transaction — 206

Using a two-stage feature selection method to remove biasing and collinear features from the aggregated row of transaction data to generate a reduced transaction data set having features relevant to batch transaction detection — 208

Use the reduced transaction data set of transaction data and the label for training, testing and validating the batch transaction detection model — 210

Figure 2

Figure 3

| | Master Table | | | | | | | | | | |
|---|---|---|---|---|---|---|---|---|---|---|---|
| Block Hash (key) | Tx Hash | Total value BTC | Input/ Output | Input Total | Output Total | Address Hash | value | ... | Label Name | Label |
| 000BC05... | A3B0E... | 61 | Input | 61 | 61 | 18SH9v... | 50 | ... | Batched | 0 |
| 000BC05... | A3B0E... | 61 | Input | 61 | 61 | 15NUw... | 1 | ... | Batched | 0 |
| 000BC05... | A3B0E... | 61 | Input | 61 | 61 | 1ByLSV... | 10 | ... | Batched | 0 |
| 000BC05... | A3B0E... | 61 | Output | 61 | 61 | 1BBz9... | 61 | ... | Batched | 0 |

## Figure 4

| | Aggregated Table | | | | | | | | | | |
|---|---|---|---|---|---|---|---|---|---|---|---|
| Block Hash (key) | Tx Hash | Total value BTC | Inputs | Outputs | Input Total | Average Input Value | Output Total | Average Output value | ... | Label Name | Label |
| 000BC05... | A3B0E... | 61 | 3 | 1 | 61 | 20.33 | 61 | 61 | ... | Batched | 0 |

## Figure 5

EP 4 687 089 A1

Figure 6

700

obtaining transaction data from a block in a blockchain, wherein the transaction data comprises a plurality of items, each item having a set of features and associated feature values;

702

providing the aggregated transaction data to a machine learning model trained to identify whether a transaction in the blockchain is a batch transaction;

704

receiving from the model, as output, information of whether the transaction is a batch transaction.

706

Figure 7

# EUROPEAN SEARCH REPORT

**Application Number**

EP 24 19 1909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/067752 A1 (FANG CHUNSHENG VICTOR [US] ET AL) 3 March 2022 (2022-03-03)<br>* paragraph [0047] - paragraph [0051] *<br>* paragraph [0091] *<br>* paragraph [0108] - paragraph [0111] *<br>* paragraph [0174] *<br>* paragraph [0200] - paragraph [0207] *<br>----- | 1-10 | INV.<br>G06Q20/06<br><br>ADD.<br>G06Q20/38<br>G06Q20/40 |
| X | CN 117 670 354 A (SHENZHEN TENPAY NETWORK FINANCIAL PETTY LOAN CO LTD ET AL.) 8 March 2024 (2024-03-08)<br>* paragraph [0092] *<br>* paragraph [0167] - paragraph [0168] *<br>----- | 1-10 | |
| A | US 2022/398264 A1 (ELOUL SHALTIEL [GB] ET AL) 15 December 2022 (2022-12-15)<br>* figure 2 *<br>* paragraph [0042] - paragraph [0057] *<br>----- | 1-10 | |

**TECHNICAL FIELDS SEARCHED (IPC)**

G06Q
G06N

The present search report has been drawn up for all claims

| Place of search | Date of completion of the search | Examiner |
|---|---|---|
| The Hague | 10 January 2025 | Coquil, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 687 089 A1

## ANNEX TO THE EUROPEAN SEARCH REPORT
## ON EUROPEAN PATENT APPLICATION NO.

EP 24 19 1909

10-01-2025

| Patent document cited in search report | Publication date | Patent family member(s) | Publication date |
|---|---|---|---|
| US 2022067752 A1 | 03-03-2022 | NONE | |
| CN 117670354 A | 08-03-2024 | NONE | |
| US 2022398264 A1 | 15-12-2022 | US 2022398233 A1<br>US 2022398264 A1 | 15-12-2022<br>15-12-2022 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOFER, M.** ; **GOMBER, P.** ; **HINZ, O.** et al. Blockchain. *Bus Inf Syst Eng*, 2017, vol. 59, 183-187

- **BOHME** ; **RAINER** ; **NICOLAS CHRISTIN** ; **BENJAMIN EDELMAN** ; **TYLER MOORE**. Bitcoin: Economics, Technology, and Governance. *Journal of Economic Perspectives*, 2015, vol. 29 (2), 213-38